# EUROPÄISCHE PATENTSCHRIFT

(11) **EP 2 677 155 B1**
(45) Veröffentlichungstag und Bekanntmachung des Hinweises auf die Patenterteilung: **07.01.2015**
(21) Anmeldenummer: 13183896.3
(22) Anmeldetag: 18.11.2010
(51) Int. Cl.: F02M 35/10, F02B 31/06, F02D 9/10, F02B 31/08, F02D 11/10

(54) **Klappenvorrichtung und Sauganlage**
Flap Device and Intake System
Dispositif de Clapet et Dispositif d'Alimentation

(30) Priorität: 23.11.2009 DE 102009054184
(43) Veröffentlichungstag der Anmeldung: 25.12.2013
(62) Teilanmeldung aus: 10779551.0
(73) Patentinhaber: MAHLE International GmbH, 70376 Stuttgart (DE)
(72) Erfinder: Morgillo, Ivano, 71543 Neuhütten (DE); Eisele, Marc, 79211 Denzlingen (DE)
(74) Vertreter: BRP Renaud & Partner mbB Rechtsanwälte Patentanwälte Steuerberater

(56) Entgegenhaltungen:
- EP-A1- 1 884 636
- EP-A2- 1 024 267
- WO-A1-2006/024468
- DE-A1- 10 140 314
- DE-A1-102008 040 177
- DE-B3-102004 045 730

## Beschreibung

Die vorliegende Erfindung betrifft eine Klappenvorrichtung für eine Sauganlage einer Brennkraftmaschine, insbesondere eines Kraftfahrzeugs, mit den Merkmalen des Oberbegriffs des Anspruchs 1. Die Erfindung betrifft außerdem eine mit einer derartigen Klappenvorrichtung ausgestattete Sauganlage.

Eine Klappenvorrichtung der eingangs genannten Art ist aus der EP 1 884 636 A1 bekannt. Sie umfasst ein Gehäuse, das genau einen Einlasskanal je Zylinder der Brennkraftmaschine aufweist, und eine Klappenanordnung, die für jeden Einlasskanal eine Klappe zum Verändern des durchströmbaren Querschnitts des jeweiligen Einlasskanals aufweist, wobei die Klappenanordnung für alle Klappen eine gemeinsame Betätigungswelle zum gemeinsamen Verschwenken der Klappen um die Klappenschwenkachse aufweist, wobei die Betätigungswelle einen Magnetträger drehfest trägt, der seinerseits einen Permanentmagneten trägt, der mit einem Drehwinkelsensor zur Drehlagenerkennung der Klappenanordnung zusammenwirkt, wobei das Gehäuse zwischen dem Permanentmagneten und dem Drehwinkelsensor einen vollständig geschlossenen Wandabschnitt aufweist. Bei der bekannten Klappenanordnung bewirkt der geschlossene Wandabschnitt eine dichte Trennung zwischen dem Drehwinkelsensor und dem Permanentmagneten. Allerdings wird dadurch die Auswahl der Materialien, die für das Gehäuse verwendet werden können, auf magnetisch bzw. elektrisch nicht leitende Materialien eingeschränkt.

Aus der DE 199 46 861 A1 ist eine weitere Klappenvorrichtung bekannt, deren Gehäuse für jeden Zylinder der Brennkraftmaschine genau einen Einlasskanal aufweist. Ferner weist die Klappenvorrichtung eine Klappenanordnung auf, die für jeden Einlasskanal eine Klappe zum Verändern des durchströmbaren Querschnitts des jeweiligen Einlasskanals aufweist. Bei der bekannten Klappenvorrichtung bilden alle Klappen zusammen einen integralen, einteiligen Körper, der gleichzeitig die Funktion der Betätigungswelle übernimmt. Die einzelnen Klappen sind bei dieser Klappenvorrichtung als Schmetterlingsklappen konfiguriert, die zentral zur Klappenschwenkachse angeordnet sind.

Aus der EP 0 726 388 A1 ist eine andere Klappenvorrichtung bekannt, bei der das Gehäuse für jeden Zylinder der Brennkraftmaschine zwei Einlasskanäle aufweist, wobei die Klappenanordnung nur für jeden zweiten Einlasskanal eine Klappe zum Verändern des durchströmbaren Querschnitts aufweist. Für die Betätigung der Klappen ist eine gemeinsame Betätigungswelle vorgesehen, an der die einzelnen Klappen angebracht sind. Hierzu weist die Betätigungswelle für jede Klappe eine Auskragung auf, an welcher die jeweilige Klappe angeordnet ist, wodurch sich eine günstige Drehmomentübertragung zwischen Betätigungswelle und Klappe ergibt.

Bei der bekannten Klappenvorrichtung können die Klappen als zentral zur Klappenschwenkachse angeordnete Schmetterlingsklappen oder als exzentrisch zur Klappenschwenkachse geformte, von der integralen Betätigungswelle auskragende Klappen konfiguriert sein.

Die vorliegende Erfindung beschäftigt sich mit dem Problem, für eine Klappenvorrichtung der eingangs genannten Art bzw. für eine damit ausgestattete Sauganlage eine verbesserte oder zumindest eine andere Ausführungsform anzugeben, die sich insbesondere dadurch auszeichnet, dass die Klappenanordnung mit einer vergleichsweise hohen Präzision arbeitet und dass eine größere Freiheit bei der Auswahl der verwendbaren Materialien besteht, wobei außerdem die Herstellungskosten vergleichsweise gering sein sollen. Alternativ oder zusätzlich soll in der Offenstellung der jeweiligen Klappe der Einfluss auf die Luftströmung reduziert sein.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, den Wandabschnitt im Erfassungsbereich des Drehwinkelsensors mit einer Unterbrechung bzw. mit einem Durchbruch zu versehen. Durch die Anordnung dieses Wanddurchbruchs wird das Magnetfeld des Permanentmagneten direkt auf den Drehwinkelsensor übertragen. Somit können Materialien für das Gehäuse bzw. für die gesamte Sauganlage verwendet werden, die magnetisch bzw. elektrisch leitfähig sind, ohne dass das Magnetfeld beeinflusst wird. Beispielsweise lassen sich nun elektrisch leitfähige Kunststoffe verwenden.

Vorteilhaft kann der Sensor in einer Sensoraufnahme angeordnet sein, die einen konisch ausgeführten Aufnahmeraum und einen Dichtbereich aufweist. Hierdurch lässt sich ein hinreichende Abdichtung zwischen Drehwinkelsensor und Permanentmagnet realisieren.

Besonders vorteilhaft kann vorgesehen sein, dass der Aufnahmeraum einen kleineren Querschnitt aufweist als der Dichtbereich, so dass zwischen dem Aufnahmeraum und dem Dichtbereich ein Absatz ausgebildet ist, von dem sich der Wandurchbruch in Richtung Aufnahmeraum erstreckt. Diese Maßnahme vereinfacht die Herstellbarkeit des Gehäuses z.B. als Spritzformteil, da durch die gewählte Gestaltung eine einfachere Entformbarkeit für ein entsprechnendes Spritzformwerkzeug erzielbar ist.

Gemäß einer anderen Ausführungsform kann vorgesehen sein, dass die jeweilige Klappe als Wannenklappe ausgestaltet ist, die einen gekrümmten Bügelbereich und einen davon abstehenden Schalenbereich aufweist, dass der jeweilige Bügelbereich zwei voneinander beabstandete Bügelenden aufweist, die koaxial zu einer Klappenschwenkachse angeordnet sind, dass die jeweilige Klappe zwischen den Bügelenden exzentrisch zur Klappenschwenkachse angeordnet ist, dass die Betätigungswelle für jede Klappe eine Auskragung aufweist und dass die jeweilige Klappe mit ihrem Bügelbereich entlang der zugehörigen Auskragung an der Betätigungswelle angeordnet ist. Diese Ausführungsform beruht auf dem allgemeinen Gedanken, die Klappen als Wannenklappen auszugestalten, die sich durch einen gekrümmten Bügelbereich und einen davon abstehenden Schalenbereich charakterisieren, wobei zur Betätigung aller Klappen eine gemeinsame Betätigungswelle vorgesehen ist, die für jede Klappe eine Auskragung aufweist, die sich bei der jeweiligen Klappe im Bügelbereich befindet. Die Verwendung einer gemeinsamen Betätigungswelle, an welcher die einzelnen Klappen angebracht sind, ermöglicht die Verwendung unterschiedlicher Materialen für die Betätigungswelle einerseits und die Klappen andererseits. Insbesondere können die Klappen aus Kunststoff spritzgeformt sein, während die Betätigungswelle aus Metall hergestellt sein kann. Hierdurch kann eine sichere und zuverlässige Betätigung der Klappen realisiert werden. Spritzformteile lassen sich mit engen Toleranzen herstellen, wodurch die Klappenvorrichtung mit einer vergleichsweise hohen Präzision arbeiten kann. Die metallische Betätigungswelle kann gegossen oder geschmiedet oder auch besonders einfach durch Umformung eines Drahts hergestellt werden. Die Betätigungswelle ist vorzugsweise als einstückige, durchgehende Welle ausgestaltet, in welche die Auskragungen für die Klappen eingeformt sind. Die Klappen lassen sich so herstellen, dass sie an die Betätigungswelle anklippsbar sein können, alternativ ist es ebenso möglich, die Klappen direkt an die Betätigungswelle anzuspritzen. Die Bauweise mit an die gemeinsame Betätigungswelle angespritzten Klappen hat den Vorteil, dass toleranzbedingte Maßabweichungen, die bei der Herstellung der Betätigungswelle auftreten können, beim Anspritzen der Klappen eliminiert werden können. Somit verfügt die Klappenvorrichtung über einen sehr geringen Fluchtfehler. Darüber hinaus lässt sich dieses Verbundbauteil besonderes preiswert realisieren.

Bei einer vorteilhaften Weiterbildung der Erfindung können die Klappen in Kaskaden auf der Betätigungswelle angeordnet sein. Hierbei sind die Klappen um wenige Grad (z.B. weniger als 10° oder weniger als 5°) zueinander verdreht auf der Betätigungswelle fixiert. Die Anordnung der Klappen ist derart gewählt, dass die von dem Antrieb der Betätigungswelle am weitesten entfernt angeordnete Klappe im eingebauten Zustand als erste zur Anlage kommt. Die am nächsten an dem Antrieb angeordnete Klappe kommt als letzte zur Anlage. Die übrigen Klappen sind mit ihrem Neigungswinkel entsprechend zwischen diesen beiden Klappen angeordnet. Durch diese Weiterbildung ist sichergestellt, dass alle Klappen sicher zur Anlage an dem Saugrohr kommen und jede Klappe über annähernd die gleiche Vorspannung verfügt. Dies hat den Vorteil, dass Torsionsschwingungen verhindert werden und das Saugrohr über verbesserte akustische Eigenschaften verfügt. Die Anordnung der Klappen auf der Betätigungswelle bzw. der vorzusehende Neigungswinkel ist abhängig von den Torsionseigenschaften der Betätigungswelle. Bei steiferen Wellen sind geringere Neigungswinkel erforderlich, als bei weicheren Wellen.

Entsprechend einer vorteilhaften Ausführungsform können die Klappen und die Einlasskanäle so aufeinander abgestimmt sein, dass sich die jeweilige Klappe in ihrer Offenstellung mit ihrem Bügelbereich und mit ihrem Schalenbereich entlang einer Innenwand des jeweiligen Einlasskanals erstreckt. Durch diese Bauweise wird die Klappe in ihrer Offenstellung, in der sie also nicht benötigt wird, weitgehend aus dem durchströmbaren Querschnitt des jeweiligen Einlasskanals seitlich heraus bewegt. Hierdurch kann der Einfluss der geöffneten Klappe auf die Durchströmung des Einlasskanals reduziert werden.

Entsprechend einer vorteilhaften Weiterbildung kann der jeweilige Einlasskanal an seiner Innenwand eine Vertiefung aufweisen, in welche die Klappe in ihrer Offenstellung zumindest mit einem zwischen den Bügelenden liegenden Abschnitt zumindest teilweise eintaucht. Durch diese Maßnahme kann der Einfluss der geöffneten und nicht benötigten Klappe auf die Strömungsverhältnisse im Einlasskanal nochmals reduziert werden.

Eine weitere Reduzierung des Strömungseinflusses der geöffneten Klappe lässt sich entsprechend einer Weiterbildung dadurch realisieren, dass die Klappe in ihrer Offenstellung mit ihrem in die Vertiefung eintauchenden Abschnitt anströmseitig bündig mit der Innenwand abschließt. Durch diese Maßnahme schließt die der Strömung ausgesetzte Kontur der Klappe an die Kontur der Innenwand des Einlasskanals an, was den Einfluss der geöffneten Klappe auf die Durchströmung des Einlasskanals reduziert.

Entsprechend einer anderen vorteilhaften Ausführungsform kann der Schalenbereich der jeweiligen Klappe in der Offenstellung der Klappe an die Kontur der Innenwand adaptiert sein. Auch diese Maßnahme trägt zu einer weiteren Reduzierung der Wechselwirkung zwischen geöffneter Klappe und Strömung im Einlasskanal bei.

Gemäß einer vorteilhaften Weiterbildung kann die Adaption der Klappe an die Kontur der Innenwand derart realisiert werden, dass der Schalenbereich die Kontur der Innenwand in der Strömungsrichtung verlängert. Auf diese Weise bildet die geöffnete Klappe im Schalenbereich kein Strömungshindernis, wodurch die Wechselwirkung mit der Luftbewegung im Einlasskanal nochmals reduziert ist.

Entsprechend einer anderen vorteilhaften Ausführungsform kann der jeweilige Schalenbereich asymmetrisch gestaltet sein. Hierdurch kann insbesondere erreicht werden, dass die Klappe in ihrer Schließstellung innerhalb des zugehörigen Einlasskanals Abschnitte mit verschieden großen durchströmbaren Querschnitten realisiert. Durch gezielte Gestaltung der Asymmetrie ist es darüber hinaus möglich, in der Schließstellung der jeweiligen Klappe eine Drallströmung oder eine Tumbleströmung zu erzeugen. Besonders vorteilhaft ist dabei eine Weiterbildung, bei der ein erster Abschnitt des Schalenbereichs in einer Schließstellung der jeweiligen Klappe an einer Wand des Einlasskanals zur Anlage kommt, während ein zweiter Abschnitt des Schalenbereichs in der Schließstellung der jeweiligen Klappe von der Wand beabstandet ist. Dies kann zur Erzeugung einer definierten Einlassströmung in den jeweiligen Zylinder genutzt werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine perspektivische, auseinander gezogene Ansicht einer Klappenvorrichtung,
- Fig. 2: eine Seitenansicht einer Klappenanordnung entsprechend einer Blickrichtung II in Fig. 3,
- Fig. 3: eine Seitenansicht der Klappenanordnung in einer Blickrichtung III gemäß Fig. 2 und 4,
- Fig. 4: eine Seitenansicht der Klappenanordnung in einer Blickrichtung IV gemäß Fig. 3,
- Fig. 5: eine Schnittansicht der Klappenvorrichtung im Bereich eines Einlasskanals,
- Fig. 6: eine Schnittansicht wie in Fig. 5, jedoch bei einer anderen Klappenstellung,
- Fig. 7: eine perspektivische Ansicht eines Hebelelements,
- Fig. 8: eine perspektivische Ansicht eines Einlegers des Hebelelements,
- Fig. 9: eine Seitenansicht des Einlegers, jedoch bei einer anderen Ausführungsform,
- Fig. 10: eine perspektivische Ansicht im Bereich einer Kopplung zwischen einer Betätigungswelle und einem Drehwinkelsensor,
- Fig. 11: eine perspektivische Ansicht eines Gehäuses der Klappenvorrichtung im Bereich einer Stirnseite mit dem Drehwinkelsensor, jedoch bei einer anderen Ausführungsform,
- Fig. 12: eine stark vereinfachte Schnittansicht der Klappenvorrichtung im Bereich einer Kopplung zwischen der Klappenanordnung und dem Drehwinkelsensor,
- Fig. 13: eine perspektivische Ansicht einer Sauganlage mit der Klappenvorrichtung
- Fig. 14: eine Schnittansicht der Klappenvorrichtung bei einer alternativen Ausgestaltung des Sensorbereichs"
- Fig. 15: eine Draufsicht auf die Klappenvorrichtung im Sensorbereich gemäß Figur 14.

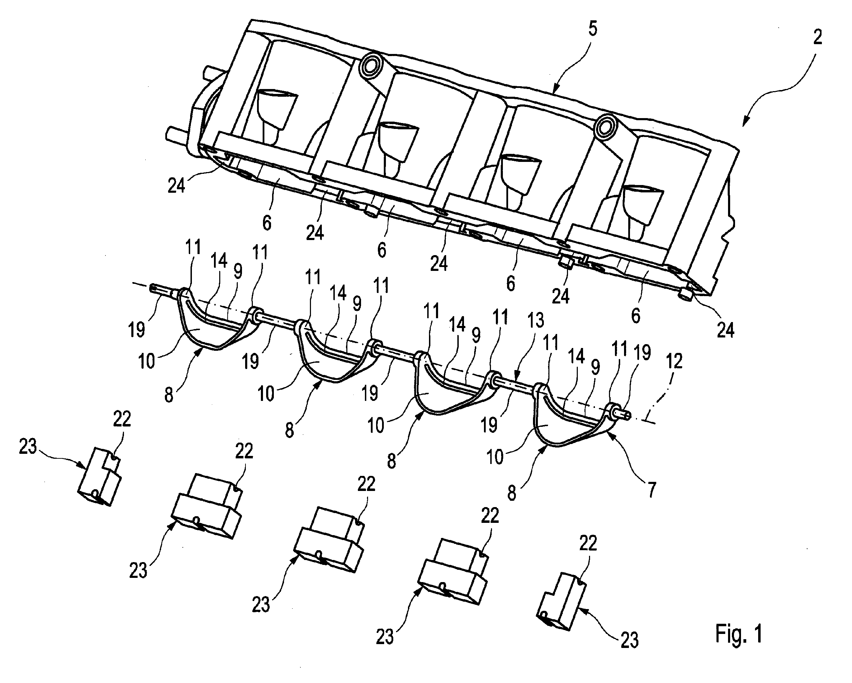

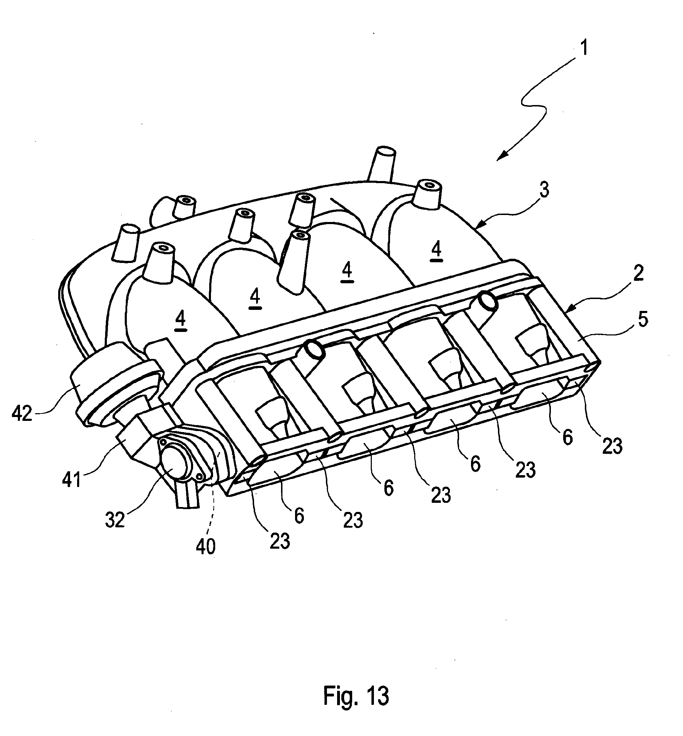

Entsprechend den Fig. 1 bis 15 umfasst eine nur in Fig. 13 erkennbare Sauganlage 1 eine Klappenvorrichtung 2 zum Anschluss an eine hier nicht gezeigte Brennkraftmaschine, die insbesondere in einem Kraftfahrzeug angeordnet sein kann. Die Sauganlage 1 dient zur Luftversorgung der Brennkraftmaschine, die als Kolbenmotor ausgestaltet ist und mehrere Zylinder aufweist. Die Sauganlage 1 weist im gezeigten Beispiel außerdem einen Frischluftverteiler 3 auf, der mehrere Einlassrohre 4 besitzt. Bei den hier gezeigten Ausführungsformen ist die Klappenvorrichtung 2 als Zwischenflansch ausgestaltet, der im montierten Zustand zwischen dem Frischluftverteiler 3 und der Brennkraftmaschine angeordnet ist. Insbesondere kann die Klappenvorrichtung 2 eine komplett vormontierbare Einheit bilden, die unabhängig von der übrigen Sauganlage 1 vormontierbar ist. Bei anderen Ausgestaltungen kann die Sauganlage 1 als einteiliges Bauteil ausgeführt sein, bei dem die Funktion des Zwischenflansches integriert ist und die Klappenvorrichtung 2 direkt in ein Gehäuse der Sauganlage 1 eingebracht ist. Gemäß anderen Ausführungen kann der Zwischenflansch auch mit anderen Luftzuführungseinheiten, wie z.B. Kompressoren oder Luftverteiler mit oder ohne Kühler, verbunden sein und eine Sauganlage bilden.

Entsprechend den Fig. 1 bis 15 umfasst die Klappenvorrichtung 2 ein Gehäuse 5, das genau einen Einlasskanal 6 je Zylinder der Brennkraftmaschine aufweist. Im gezeigten Beispiel ist das Gehäuse 5 mit vier Einlasskanälen 6 ausgestattet. Die Klappenvorrichtung 2 kann somit für einen Reihen-Vier-Zylinder-Motor oder aber für eine Bank eines V-8-Zylinder-Motors konfiguriert sein. Die Zylinderzahl bzw. die Anzahl der Einlasskanäle 6 ist hierbei jedoch rein exemplarisch.

Bei besonderen Ausgestaltungen kann der Kanal im Saugrohr einflutig, also ein einzelner Kanal pro Zylinder vorgesehen sein. Bei anderen Ausgestaltungen können zwei Kanäle pro Zylinder vorgesehen sein, der Kanal ist also als zweiflutiger Kanal ausgeführt. Die Fortführung des ein- oder zweiflutigen Kanals im Zwischenflansch kann ebenfalls ein- oder zweiflutig ausgestaltet sein. Im Zylinderkopf selbst kann der Kanal ebenfalls ein- oder zweiflutig ausgeführt sein. Hierbei ist die Anzahl der Kanäle im Zylinderkopf abhängig von der Anzahl der Ventile. Durch die unterschiedliche Kombination von nacheinander angeordneten ein- bzw. zweiflutigen Kanälen können bestimmte Strömungen, wie z.B. Drall-Strömungen und/oder Tumble-Strömungen, erzeugt werden, die eine optimale Füllung der Zylinder ermöglichen.

Die Klappenvorrichtung 2 umfasst außerdem eine Klappenanordnung 7. Diese weist für jeden Einlasskanal 6 eine einzige Klappe 8 auf. Die Klappen 8 dienen zum Verändern des durchströmbaren Querschnitts des jeweiligen Einlasskanals 6. Entsprechend den Fig. 1 bis 6 sind die Klappen 8 hier als Wannenklappen ausgestaltet. Eine derartige Wannenklappe 8 charakterisiert sich einerseits durch einen gekrümmten Bügelbereich 9 und andererseits durch einen vom Bügelbereich 9 abstehenden Schalenbereich 10. Der jeweilige Bügelbereich 9 weist zwei voneinander beabstandete Bügelenden 11 auf, die jeweils koaxial zu einer Klappenschwenkachse 12 angeordnet sind. Zwischen den Bügelenden 11 kragt der Bügelbereich 9 aus der Klappenschwenkachse 12 aus. Durch diese Auskragungen ist die jeweilige Klappe 8 zwischen den Bügelenden 11 exzentrisch zur Klappenschwenkachse 12 angeordnet.

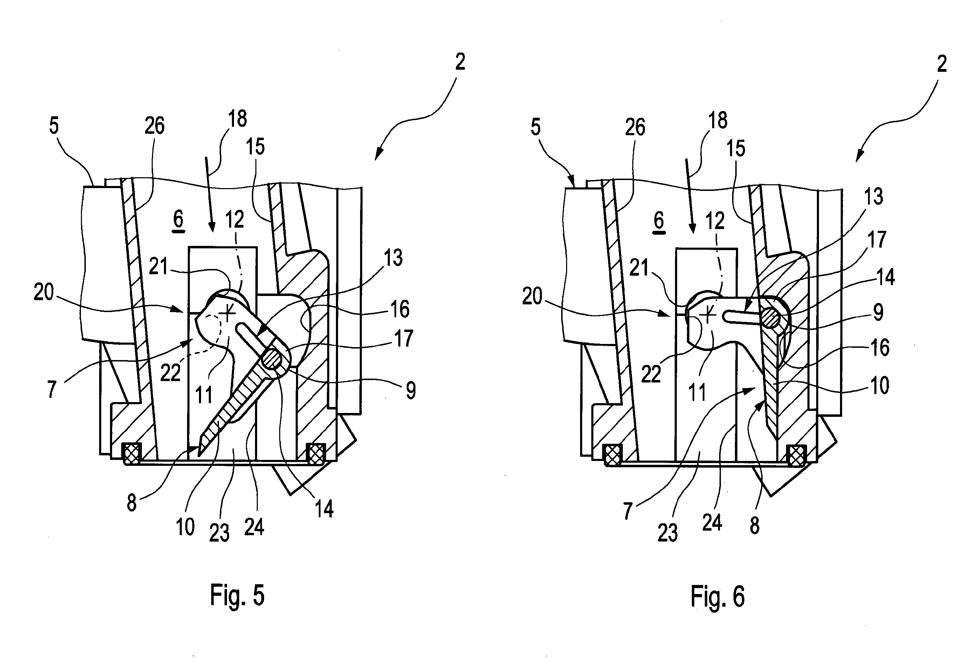

Die Klappenanordnung 7 weist für alle Klappen 8 eine gemeinsame Betätigungswelle 13 auf, mit deren Hilfe die Klappen 8 gemeinsam um die Klappenschwenkachse 12 verschwenkt werden können. Die Betätigungswelle 13 besitzt für jede Klappe 8 eine Auskragung 14 bezüglich der Klappenschwenkachse 12. Im Bereich dieser Auskragungen 14 verläuft die Betätigungswelle 13 somit exzentrisch zur Klappenschwenkachse 12. Die einzelnen Klappen 8 sind nun im Bereich der Auskragungen 14 an der Betätigungswelle 13 angeordnet. Dabei erfolgt die Anordnung der Klappen 8 an der Betätigungswelle 13 zweckmäßig so, dass die jeweilige Klappe 8 mit ihrem Bügelbereich 9 entlang der jeweiligen Auskragung 14 angeordnet ist. Entsprechend den Fig. 5 und 6 können die Klappen 8 und die Einlasskanäle 6 zweckmäßig so aufeinander abgestimmt sein, dass sich die jeweilige Klappe 8 in einer in Fig. 6 gezeigten Offenstellung mit ihrem Bügelbereich 9 sowie mit ihrem Schalenbereich 10 entlang einer Innenwand 15 des jeweiligen Einlasskanals 6 erstreckt. Dabei kann sich die jeweilige Klappe 8 derart bzw. so nah entlang der Innenwand 15 erstrecken, dass eine Umströmung der Klappe zwischen der Innenwand 15 und dem Schalenbereich 10 nicht möglich ist oder weitgehend ausgeschlossen ist.

Bei den hier gezeigten Ausführungsformen ist der Einlasskanal 6 an seiner Innenwand 15 mit einer Vertiefung 16 ausgestattet. Diese ist so dimensioniert und so positioniert, dass die Klappe 8 in ihrer Offenstellung zumindest mit einem zwischen den Bügelenden 11 liegenden Abschnitt in diese Vertiefung 16 zumindest zum Teil eintaucht. Besonders vorteilhaft ist dabei die hier gezeigte Ausführungsform, bei welcher die Klappen 8 und die Einlasskanäle 6 und die Vertiefungen 16 so aufeinander abgestimmt sind, dass die Klappe 8 in ihrer Offenstellung gemäß Fig. 6 mit ihrem in die Vertiefung 16 eintauchenden Abschnitt 17 mit der Innenwand 15 an der Anströmseite bündig abschließt. In den Fig. 5 und 6 ist eine Strömungsrichtung 18, in welcher der Einlasskanal 6 die Frischluft zum zugehörigen Zylinder führt, durch einen Pfeil angedeutet. Erkennbar schließt die Klappe 8 im Bereich der Vertiefung 16 anströmseitig bündig mit der Innenwand 15 ab.

Fig. 6 ist ebenfalls entnehmbar, dass der Schalenbereich 10 bei der hier gezeigten bevorzugten Ausführungsform in der Offenstellung an die Kontur der Innenwand 15 adaptiert ist, und zwar vorzugsweise derart, dass der Schalenbereich 10 die Kontur der Innenwand 15 in der Strömungsrichtung 18 verlängert. Hierdurch wird ein widerstandsarmer Übergang zwischen der Innenwand 15 und der Klappe 8 geschaffen, wodurch es möglich ist, die Frischluftströmung in der Offenstellung weitgehend ohne Wechselwirkung mit der Klappe 8 zum jeweiligen Zylinder zu führen.

Die einzelnen Klappen 8 können grundsätzlich unabhängig von der Betätigungswelle 13 hergestellt sein. Sie können an die Betätigungswelle 13 angeklippst oder in sonstiger Weise mit der Betätigungswelle 13 verbunden sein. Bevorzugt wird jedoch eine Ausführungsform, bei welcher die Klappen 8 an die Betätigungswelle 13 angespritzt sind. Dabei ist die Betätigungswelle 13 vorzugsweise aus Metall hergestellt, während die Klappen 8 aus Kunststoff spritzgeformt sind. Beim Anspritzen der Klappen 8 an die Betätigungswelle 13 können bspw. Herstellungstoleranzen der Betätigungswelle 13 ausgeglichen werden.

Wie insbesondere den Fig. 1, 5 und 6 entnehmbar ist, können die Klappen 8 so an die Betätigungswelle 13 angespritzt sein, dass die Betätigungswelle 13 im Bereich ihrer Auskragung 14 nur teilweise vom Klappenwerkstoff umschlossen ist. Ebenso ist eine volle Umspritzung der Auskragungen 14 durch den Werkstoff der Klappe 8 denkbar, bspw. um eine besonders hochwertige Adaption der Klappe 8 bzw. des Schalenbereichs 10 an die Kontur der Innenwand 15 zu erzielen.

Entsprechend den Fig. 1 bis 4 kann die Betätigungswelle 13 beiderseits jeder Klappe 8 einen geraden Lagerbereich 19 aufweisen. Zwischen benachbarten Klappen 8 sind dabei zweckmäßig gemeinsame Lagerbereiche 19 vorgesehen. Das Gehäuse 5 besitzt nun entsprechend den Fig. 1, 5 und 6 mehrere Lager 20. In diesen Lagern 20 sind die Lagerbereiche 19 der Betätigungswelle 13 um die Klappenschwenkachse 12 verschwenkbar gelagert. Diese Lager 20 können dabei vorzugsweise dadurch realisiert werden, dass am Gehäuse 5 jeweils eine erste Lagerhalbschale 21 integral ausgeformt ist, während eine dazu komplementäre zweite Lagerhalbschale 22 integral an einem Lagerteil 23 ausgeformt ist, das auf geeignete Weise an das Gehäuse 5 angebaut ist. Beispielsweise werden diese Lagerteile 23 in entsprechende Lagerteilaufnahmen 24, die am Gehäuse 5 ausgebildet sind, eingesetzt. Durch die Befestigung des Gehäuses 5 an der Brennkraftmaschine ergibt sich dann automatisch eine ausreichende Fixierung der Lagerteile 23 am Gehäuse 5. Ebenso ist es möglich, die Lagerteile 23 mit dem Gehäuse 5 zu verkleben und/oder zu verklemmen, also durch Reibschluss oder Kraftschluss zu fixieren.

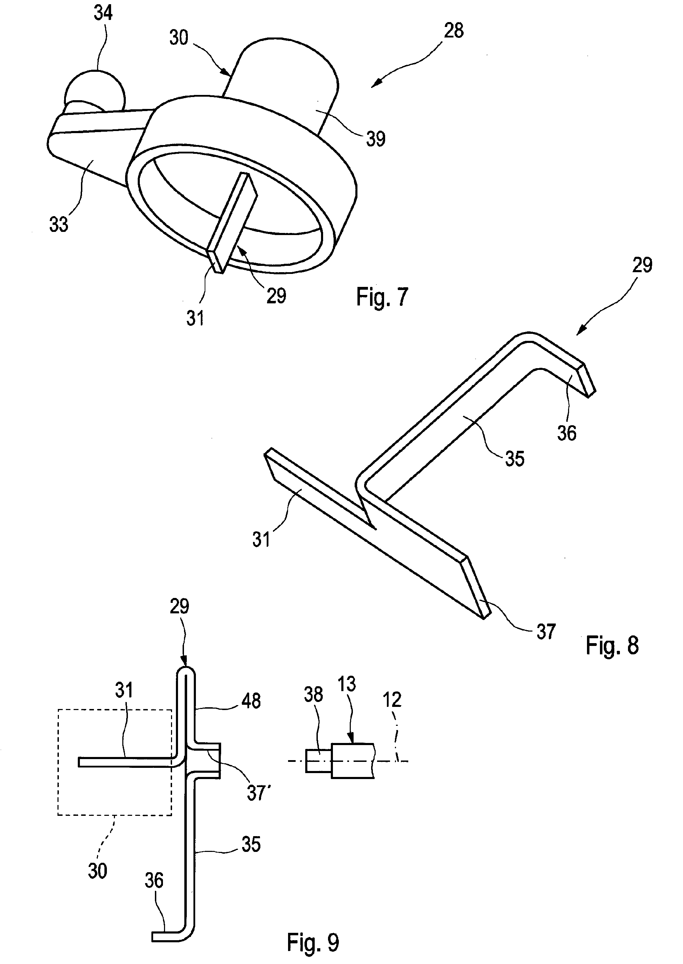

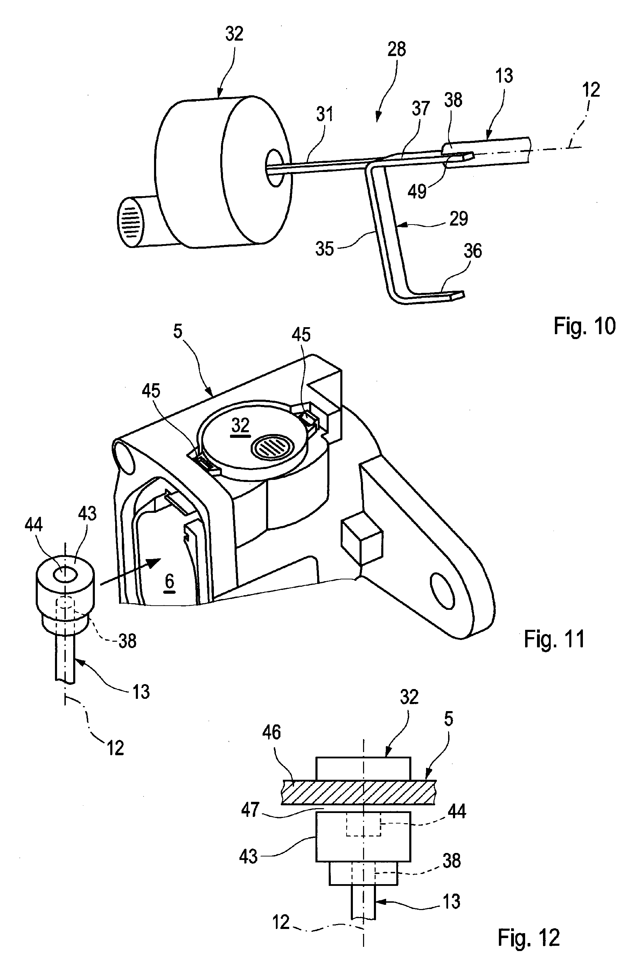

Fig. 7 zeigt ein Hebelelement 28, mit dessen Hilfe die Betätigungswelle 13 mit einem in Fig. 13 erkennbaren Stellantrieb 42 gekoppelt werden kann. Der Stellantrieb 42 leitet dabei bezüglich der Klappenschwenkachse 12 ein Drehmoment in das Hebelelement 28 ein, wobei das Hebelelement 28 dieses Drehmoment auf die Betätigungswelle 13 überträgt. Besonders vorteilhaft ist die hier gezeigte Ausführungsform, bei welcher das Hebelelement 28 einen metallischen Einleger 29 aufweist sowie einen Körper 30 aus Kunststoff besitzt, der an den Einleger 29 angespritzt ist. Im Beispiel der Fig. 7 ragt der Einleger 29 mit einem Betätigungsabschnitt 31 aus dem Kunststoffkörper 30 vor. mit diesem Betätigungsabschnitt 31 kann das Hebelelement 28 entsprechend Fig. 10 mit einem Drehwinkelsensor 32 zusammenwirken, der insbesondere als Hallsensor ausgestaltet sein kann. Der Drehwinkelsensor 32 kann die relative Drehlage der Betätigungswelle 13 und somit der Klappenanordnung 7 erkennen.

Das Hebelelement 28 besitzt im Beispiel der Fig. 7 einen Hebelarm 33, der, z. Bsp. über einen Kugelkopf 34, mit dem Stellantrieb 42 zur Drehmomenteinleitung gekoppelt werden kann. Passend dazu weist der Einleger 29 einen Hebelarmabschnitt 35 auf, der sich innerhalb des Hebelarms 33 erstreckt. Der Hebelarmabschnitt 35 kann einen abgewinkelten Endabschnitt 36 besitzen, der sich innerhalb des Kugelkopfs 34 erstreckt. Gegenüber des Betätigungsabschnitts 31 weist der Einleger 29 hier einen Kopplungsabschnitt 37 auf, der gegenüber des Betätigungsabschnitts 31 über den Kunststoffkörper 30 vorsteht und der gemäß Fig. 10 in ein Ende 38 der Betätigungswelle 13 hineinragt, das hierzu geschlitzt ist, um so Drehmoment auf die Betätigungswelle 13 übertragen zu können. In Fig. 10 ist zur besseren Veranschaulichung der Funktion des Einlegers 29 der Kunststoffkörper 30 des Hebelelements 28 weggelassen. Der Schlitz zur Aufnahme des Kopplungsabschnitts 37 ist mit 49 bezeichnet.

Gemäß Fig. 7 kann am Kunststoffkörper 30 ein kreiszylindrischer Lagerabschnitt 39 ausgebildet sein, mit dessen Hilfe das Hebelelement 28 am Gehäuse 5 um die Klappenschwenkachse 12 drehbar gelagert werden kann. Hierzu kann das Gehäuse 5 mit einer komplementär zum Lagerabschnitt 39 geformten Lageraufnahme 40 ausgestattet sein, die stirnseitig des Lagergehäuses 5 angeordnet sein kann. Bei der in Fig. 13 gezeigten Ausführungsform ist besagte Lageraufnahme 40 durch ein Zusatzgehäuse 41 verdeckt, in dem das Hebelelement 28 untergebracht ist und in dem die Kopplung mit dem Stellantrieb 42 erfolgt, der in Fig. 13 exemplarisch als Druckdose ausgestaltet ist. Der Drehwinkelsensor 32 ist an dieses Zusatzgehäuse 41 angebaut.

Im Unterschied zur Fig. 8 zeigt Fig. 9 eine andere Ausführungsform zur Realisierung eines derartigen Einlegers 29, der sich durch einen modifizierten Kupplungsabschnitt 37' sowie durch einen doppelt gefalteten Abschnitt 48 vom Einleger 29 gemäß der Fig. 8 unterscheidet. Während bei der in Fig. 8 gezeigten Ausführungsform der Kopplungsabschnitt 37 flach ausgestaltet ist, um gemäß Fig. 10 in den Aufnahmeschlitz 49 am Stirnende 38 der Betätigungswelle 13 eingreifen zu können, ist der Kopplungsabschnitt 37' bei der in Fig. 9 gezeigten Ausführungsform als Mehrkantaufnahme ausgestaltet. Komplementär dazu ist dann das stirnseitige Ende 38 der Betätigungswelle 13 als Mehrkant ausgeformt, bspw. als Vierkant. Der doppelt gefaltete Abschnitt 48 verlängert den Hebelarmabschnitt 35 über den Kopplungsabschnitt 37' hinaus und verbessert dadurch die Drehmomenteinleitung in den Kunststoffkörper 30.

Die Fig. 11 und 12 zeigen eine andere Ausführungsform, bei der die in Fig. 11 zur Veranschaulichung außerhalb des Gehäuses 5 dargestellte Betätigungswelle 13 einen Magnetträger 43 drehfest trägt. Besagter Magnetträger 43 trägt seinerseits einen Permanentmagneten 44 drehfest. Der Magnetträger 43 ist zweckmäßig an einem stirnseitigen Ende 38 der Betätigungswelle 13 angebracht. Im montierten Zustand wirkt der Permanentmagnet 44 berührungslos mit einem entsprechend gestalteten Drehwinkelsensor 32 zusammen, der wieder insbesondere als Hallsensor ausgestaltet sein kann. Besonders vorteilhaft ist dabei die hier vorgestellte Ausführungsform, bei welcher das Gehäuse 5 gemäß Fig. 12 zwischen dem Permanentmagneten 44 und dem Drehwinkelsensor 32 einen Wandabschnitt 46 besitzt. Mit anderen Worten, der Permanentmagnet 44 ist im Inneren des Gehäuses 5 angeordnet, während der Drehwinkelsensor 32 außen am Gehäuse 5 angeordnet ist. Hierdurch muss keine separate Abdichtung des Gehäuses 5 im Bereich des Drehwinkelsensors 32 bereitgestellt werden. Außerdem ist Fig. 12 entnehmbar, dass der Magnetträger 43 den Permanentmagneten 44 bezüglich der Klappenschwenkachse 12 axial vom Wandabschnitt 46 beabstandet hält, so dass ein Spalt 47 axial zwischen dem Wandabschnitt 46 und dem Magnetträger 43 bzw. dem Permanentmagneten 44 entsteht.

Im gezeigten Beispiel ist der Drehwinkelsensor 32 besonders einfach am Gehäuse 5 befestigt, nämlich durch eine Verklippsung. Hierzu können gehäuseseitige Klippselemente 45 integral am Gehäuse 5 ausgeformt sein, wodurch die Befestigung des Drehwinkelsensors 32 am Gehäuse 5 vergleichsweise preiswert realisierbar ist.

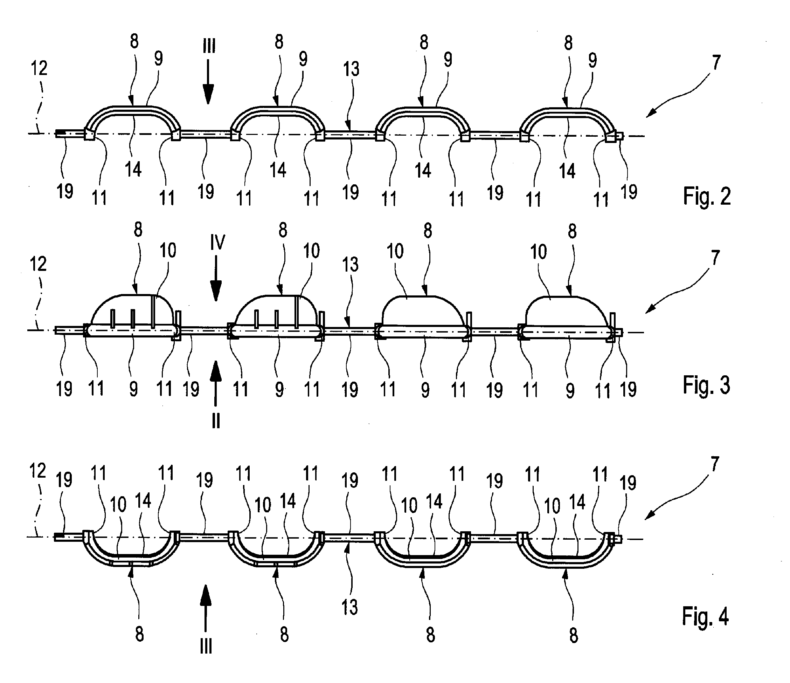

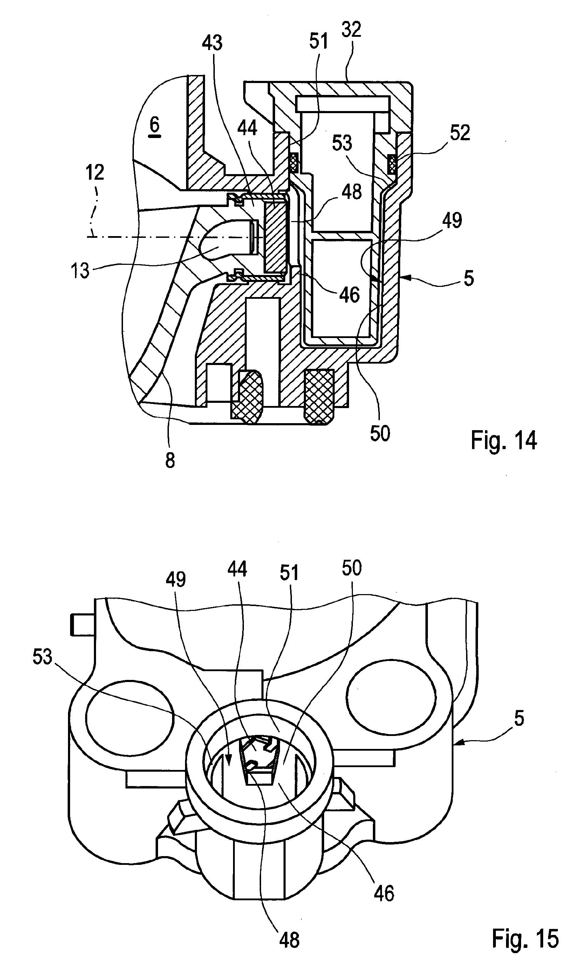

In Figur 14 ist eine alternative Ausgestaltung des Sensorbereichs im Schnitt dargestellt. Figur 15 zeigt den Sensorbereich gemäß Figur 14, ohne Sensor 32, in der Draufsicht. Im Unterschied zu dem in Figur 12 dargestellten Sensorbereich verfügt der Wandabschnitt 46 über einen Wanddurchbruch 48. Dieser Wanddurchbruch 48 ist im Bereich des Erfassungsbereiches des Sensors 32 angeordnet. Durch diesen Wanddurchbruch 48 besteht keine dichtende Trennung zwischen dem Wellenende mit dem Permanentmagneten 44 und dem Sensor 32. Durch die Anordnung des Wanddurchbruchs 48 wird das Magnetfeld des Magneten 44 direkt auf den Sensor 32 übertragen. Somit können Materialien für das Gehäuse 5 bzw. für die gesamte Sauganlage 1 verwendet werden, die magnetisch bzw. elektrisch leitfähig sind, ohne dass das Magnetfeld beeinflusst wird. Vorzugsweise können elektrisch leitfähige Kunststoffe verwendet werden. Der Wanddurchbruch 48 kann beliebige Geometrien, wie z. B. rund, oval, rechteckig oder quadratisch, aufweisen. Im vorliegenden Ausführungsbeispiel ist der Wanddurchbruch 48 V-förmig ausgestaltet, wobei sich der Wanddurchbruch 48 in Entformungsrichtung vergrößert. Somit kann ein Entformungsschieber einfach nach oben weggezogen werden. Weiterhin ist bei dieser Ausführung der Sensor 32 in einer Sensoraufnahme 49 angeordnet, die über einen konisch ausgeführten Aufnahmeraum 50 und einen Dichtbereich 51 verfügt. Der Wanddurchbruch 48 ist im Bereich des Aufnahmeraums 50 angeordnet. Der Dichtbereich 51 ist derart ausgestaltet, dass eine Dichtung 52, welche bei diesem Ausführungsbeispiel als O-Ring- Dichtung ausgeführt ist, eine Abdichtung zwischen der Sensoraufnahme 49 und dem Sensor 32 ausbildet und so das Innere der Einlasskanäle 6 gegenüber der Umgebung abgedichtet ist.
Der Aufnahmeraum 50 verfügt über einen kleineren Querschnitt als der Dichtbereich 51. Somit ist zwischen dem Aufnahmeraum 50 und dem Dichtbereich 51 ein Absatz 53 gebildet. Von diesem Absatz 53 erstreckt sich der Wanddurchbruch 48 in Richtung des Aufnahmeraums 50. Somit ist der Wanddurchbruch 48 einfach entformbar. Bei diesem Ausführungsbeispiel sind gekröpfte Klappen 8 gemäß den Figuren 2 bis 4 in die Einlasskanäle 6 integriert. Bei anderen Ausführungen kann die Anordnung aber auch über eine geradlinig ausgeführte Klappenwelle und daran angeordnete Klappen, mit oder ohne Auskragungsbereiche, verfügen. Selbstverständlich können auch, wie oben beschrieben, unterschiedliche Kombination von ein- und zweiflutigen Kanälen vorgesehen sein.

## Patentansprüche

1. Klappenvorrichtung für eine Sauganlage (1) einer Brennkraftmaschine, insbesondere eines Kraftfahrzeugs,
- mit einem Gehäuse (5), das genau einen Einlasskanal (6) je Zylinder der Brennkraftmaschine aufweist,
- mit einer Klappenanordnung (7), die für jeden Einlasskanal (6) eine Klappe (8) zum Verändern des durchströmbaren Querschnitts des jeweiligen Einlasskanals (6) aufweist,
- wobei die Klappenanordnung (7) für alle Klappen (8) eine gemeinsame Betätigungswelle (13) zum gemeinsamen Verschwenken der Klappen (8) um die Klappenschwenkachse (12) aufweist,
- wobei die Betätigungswelle (13) einen Magnetträger (43) drehfest trägt, der seinerseits einen Permanentmagneten (44) trägt, der mit einem Drehwinkelsensor (32) zur Drehlagenerkennung der Klappenanordnung (7) zusammenwirkt,
- wobei das Gehäuse (5) zwischen dem Permanentmagneten (44) und dem Drehwinkelsensor (32) einen Wandabschnitt (46) aufweist,
**dadurch gekennzeichnet,**
**dass** der Wandabschnitt (46) einen Wanddurchbruch (48) aufweist.

2. Klappenvorrichtung nach Anspruch 1,
**dadurch gekennzeichnet,**
**dass** der Sensor (32) in einer Sensoraufnahme (49) angeordnet ist, die einen konisch ausgeführten Aufnahmeraum (50) und einen Dichtbereich (51) aufweist.

3. Klappenvorrichtung nach Anspruch 2,
**dadurch gekennzeichnet,**
**dass** der Aufnahmeraum (50) einen kleineren Querschnitt aufweist als der Dichtbereich (51), so dass zwischen dem Aufnahmeraum (50) und dem Dichtbereich (51) ein Absatz (53) ausgebildet ist, von dem sich der Wandurchbruch (48) in Richtung Aufnahmeraum (50) erstreckt.

4. Klappenanordnung nach einem der Ansprüche 1 bis 3,
**dadurch gekennzeichnet,**
- **dass** die jeweilige Klappe (8) als Wannenklappe ausgestaltet ist, die einen gekrümmten Bügelbereich (9) und einen davon abstehenden Schalenbereich (10) aufweist,
- **dass** der jeweilige Bügelbereich (9) zwei voneinander beabstandete Bügelenden (11) aufweist, die koaxial zu einer Klappenschwenkachse (12) angeordnet sind,
- **dass** die jeweilige Klappe (8) zwischen den Bügelenden (11) exzentrisch zur Klappenschwenkachse (12) angeordnet ist,
- **dass** die Betätigungswelle (13) für jede Klappe (8) eine Auskragung (14) aufweist,
- **dass** die jeweilige Klappe (8) mit ihrem Bügelbereich (9) entlang der zugehörigen Auskragung (14) an der Betätigungswelle (13) angeordnet ist.

5. Klappenvorrichtung nach Anspruch 4,
**dadurch gekennzeichnet,**
**dass** die Klappen (8) und die Einlasskanäle (6) so aufeinander abgestimmt sind, dass sich die jeweilige Klappe (8) in ihrer Offenstellung mit ihrem Bügelbereich (9) und mit ihrem Schalenbereich (10) entlang einer Innenwand (15) des jeweiligen Einlasskanals (6) erstreckt.

6. Klappenvorrichtung nach Anspruch 5,
**dadurch gekennzeichnet,**
**dass** der jeweilige Einlasskanal (6) an seiner Innenwand (15) eine Vertiefung (16) aufweist, in welcher die Klappe (8) in ihrer Offenstellung zumindest mit einem zwischen den Bügelenden (11) liegenden Abschnitt zumindest teilweise eintaucht, wobei insbesondere vorgesehen sein kann, dass die Klappe (8) in ihrer Offenstellung mit ihrem in die Vertiefung (16) eintauchenden Abschnitt (17) anströmseitig bündig mit der Innenwand (15) abschließt.

7. Klappenvorrichtung nach Anspruch 5 oder 6,
**dadurch gekennzeichnet,**
**dass** der Schalenbereich (10) der jeweiligen Klappe (8) in deren Offenstellung an die Kontur der Innenwand (15) adaptiert ist, wobei insbesondere vorgesehen sein kann, dass diese Adaption so erfolgt, dass der Schalenbereich (10) die Kontur der Innenwand (15) in der Strömungsrichtung (18) verlängert.

8. Klappenvorrichtung nach einem der Ansprüche 1 bis 7,
**dadurch gekennzeichnet,**
**dass** die jeweilige Klappe (8) an die Betätigungswelle (13) angespritzt ist.

9. Klappenvorrichtung nach einem der Ansprüche 1 bis 8,
**dadurch gekennzeichnet,**
- **dass** die Betätigungswelle (13) beiderseits jeder Klappe (8) einen geraden Lagerbereich (19) aufweist,
- **dass** das Gehäuse (5) mehrere Lager (20) aufweist, in denen die Lagerbereiche (19) der Betätigungswelle (13) gelagert sind,
- wobei insbesondere vorgesehen sein kann, dass jedes Lager (20) eine integral am Gehäuse (5) ausgebildete erste Lagerhalbschale (21) und eine an einem an das Gehäuse (5) angebauten Lagerteil (23) ausgebildete zweite Lagerhalbschale (22) aufweist.

10. Klappenvorrichtung nach einem der Ansprüche 1 bis 9,
**dadurch gekennzeichnet,**
- **dass** benachbarte Klappen (8) bezüglich der Klappenschwenkachse (12) um einen Differenzwinkel zueinander versetzt an der Betätigungswelle (13) angeordnet sind,
- wobei insbesondere vorgesehen sein kann, dass der Differenzwinkel mit Bezug auf eine zu einem Stellantrieb (42) zum Antreiben der Betätigungswelle (13) proximal positionierte Klappe (8) mit zunehmendem Abstand vom Stellantrieb (42) zunimmt,
- wobei insbesondere vorgesehen sein kann, dass die Differenzwinkel der Klappen (8) so aufeinander abgestimmt sind, dass eine zu einem Stellantrieb (42) zum Antreiben der Betätigungswelle (13) distal positionierte Klappe (8) beim Schließen oder beim Öffnen der Klappen (8) zuerst an einer Wand (15; 26) des jeweiligen Einlasskanals (6) zur Anlage kommt und die anderen Klappen (8) mit abnehmendem Abstand zum Stellantrieb (42) nacheinander an der jeweiligen Wand (15; 26) des jeweiligen Einlasskanals (6) zur Anlage kommen,
- wobei insbesondere vorgesehen sein kann, dass der Differenzwinkel zwischen benachbarten Klappen (8) maximal 10° oder maximal 5° oder maximal 2° beträgt.

11. Klappenvorrichtung nach einem der Ansprüche 1 bis 10,
**dadurch gekennzeichnet,**
- **dass** die Betätigungswelle (13) über ein Hebelelement (28) mit einem Stellantrieb (42) gekoppelt ist,
- **dass** das Hebelelement (28) einen metallischen Einleger (29) und einen an den Einleger (29) angespritzten Körper (30) aus Kunststoff aufweist,
- wobei insbesondere vorgesehen sein kann, dass der Einleger (29) aus dem Kunststoffkörper (30) vorsteht und mit einem Drehwinkelsensor (32) zur Drehlagenerkennung der Klappenanordnung (7) zusammenwirkt,
- wobei insbesondere vorgesehen sein kann, dass der Kunststoffkörper (30) einen kreiszylindrischen Lagerabschnitt (39) aufweist, der in einer komplementären Lageraufnahme (40) des Gehäuses (5) um die Klappenschwenkachse (12) drehbar gelagert ist.

12. Klappenvorrichtung nach einem der Ansprüche 1 bis 11,
**dadurch gekennzeichnet,**
**dass** das Gehäuse (5) als Zwischenflansch ausgestaltet ist, der zwischen der Brennkraftmaschine und der übrigen Sauganlage (1) montierbar ist.

13. Klappenvorrichtung nach einem der Ansprüche 1 bis 12,
**dadurch gekennzeichnet,**
**dass** der jeweilige Einlasskanal (6) einflutig oder zweiflutig ausgestaltet ist.

14. Sauganlage zur Frischluftversorgung einer Brennkraftmaschine, insbesondere eines Kraftfahrzeugs, mit zumindest einer Klappenvorrichtung (2) nach einem der Ansprüche 1 bis 13.

## Claims

1. A flap device for an intake system (1) of an internal combustion engine, in particular of a motor vehicle, comprising:
- a housing (5) having exactly one inlet duct (6) per cylinder of the internal combustion engine,
- a flap arrangement (7) having a flap (8) for each inlet duct (6) for varying the cross-section of the respective inlet duct (6) through which a flow can pass,
- wherein the flap arrangement (7) has a common actuating shaft (13) for all flaps (8) for the common pivoting of the flaps (8) about the flap pivot axis (12),
- wherein the actuating shaft (13) carries a magnet carrier (43) in a rotationally fixed manner and the magnet carrier, in turn, carries a permanent magnet (44) which interacts with a rotation angle sensor (32) for detecting of a rotation position of the flap arrangement (7),
- wherein the housing (5) has a wall section (46) between the permanent magnet (44) and the rotation angle sensor (32),
**characterized in that**
the wall section (46) has a wall aperture (48).

2. The flap device according to claim 1,
**characterized in that**
the sensor (32) is arranged in a sensor receptacle (49) that has a conically formed receiving space (50) and a sealing region (51).

3. The flap device according to claim 2,
**characterized in that**
the receiving space (50) has a smaller cross-section than the sealing region (51) so that a shoulder (53) is formed between the receiving space (50) and the sealing region (51), the wall aperture (48) extending from said shoulder in the direction of the receiving space (50).

4. The flap device according to any one of claims 1 to 3, **characterized in that**
- the respective flap (8) is a trough-shaped flap (8) having a curved stirrup region (9) and a shell region (10) projecting therefrom,
- the respective stirrup region (9) has two stirrup ends (11) spaced apart from each other and arranged coaxially with respect to the flap pivot axis (12),
- the respective flap (8) is arranged between the stirrup ends (11) eccentrically with respect to the flap pivot axis (12),
- the actuating shaft (13) has a projection (14) for each flap (8),
- the respective flap (8) is arranged with its stirrup region (9) along the associated projection (14) on the actuating shaft (13).

5. The flap device according to claim 4,
**characterized in that**
the flaps (8) and the inlet ducts (6) are coordinated with each other in such a manner that the respective flap (8) in its open position extends with its stirrup region (9) and with its shell region (10) along an inner wall (15) of the respective inlet duct (6).

6. The flap device according to claim 5,
**characterized in that**
the respective inlet duct (6) has on its inner wall (15) a depression (16) in which the flap (8) in its open position at least partially extends with a section lying between the stirrup ends (11), wherein it can be provided, in particular, that the flap (8) in its open position is flush with the inner wall (15) on the inflow side with its section (17) extending into the depression (16).

7. The flap device according to claim 5 or 6,
**characterized in that**
the shell region (10) of the respective flap (8) in the open position thereof is adapted to the contour of the inner wall (15), wherein it can be provided, in particular, that this adaption takes place such that the shell region (10) extends the contour of the inner wall (15) in the flow direction (18).

8. The flap device according to any one of claims 1 to 7,
**characterized in that**
the respective flap (8) is injection-molded onto the actuating shaft (13).

9. The flap device according to any one of claims 1 to 8, **characterized in that**
- the actuating shaft (13) has a straight bearing region (19) on both sides of each flap (8),
- the housing (5) has a plurality of bearings (20), the bearing regions (19) of the actuating shaft (13) being mounted therein,
- wherein it can be provided, in particular, that each bearing (20) has a first bearing half shell (21) formed integrally on the housing (5) and a second bearing half shell (22) formed on a bearing part (23) mounted onto the housing (5).

10. The flap device according to any one of claims 1 to 9, **characterized in that**
- adjacent flaps (8) are arranged on the actuating shaft (13) offset to each other with respect to the flap pivot axis (12) by an angular difference,
- wherein it can be provided, in particular, that the angular difference with respect to a flap (8) positioned proximally with respect to an adjusting device (42) for driving the actuating shaft (13) increases with an increasing distance from the adjusting drive (42),
- wherein it can be provided, in particular, that the angular differences of the flaps (8) are coordinated with each other in such a manner that when closing or opening the flaps (8), a flap (8) positioned distally with respect to an adjusting drive (42) for driving the actuating shaft (13) firstly comes to abut against a wall (15; 26) of the respective inlet duct (6), and the other flaps (8), as the distance from the adjusting device (42) decreases, successively come to abut against the respective wall (15; 26) of the respective inlet duct (6),
- wherein it can be provided, in particular, that the angular difference between adjacent flaps (8) is maximally 10° or maximally 5° or maximally 2°.

11. The flap device according to any one of claims 1 to 10, **characterized in that**
- the actuating shaft (13) is coupled with an adjusting drive (42) via a lever element (28),
- the lever element (28) has a metallic insert (29) and a plastic body (30) injection-molded onto the insert (29),
- wherein it can be provided, in particular, that the insert (29) projects out of the plastic body (30) and interacts with a rotation angle sensor (32) for detecting a rotation position of the flap arrangement (7),
- wherein it can be provided, in particular, that the plastic body (30) has a circular-cylindrical bearing section (39) mounted to be rotatable about the flap pivot axis (12) in a complementary bearing receptacle (40) of the housing (5).

12. The flap device according to any one of claims 1 to 11,
**characterized in that**
the housing (5) is configured as an intermediate flange which can be mounted between the internal combustion engine and the remaining intake system (1).

13. The flap device according to any one of claims 1 to 12,
**characterized in that**
the respective inlet duct (6) is of a single-flow or dual-flow design.

14. An inlet system for fresh air supply of an internal combustion engine, in particular of a motor vehicle, comprising at least one flap device (2) according to any one of claims 1 to 13.

## Revendications

1. Dispositif de clapet pour une installation d'aspiration (1) d'un moteur à combustion interne, notamment d'un véhicule automobile,
- comportant un logement (5), qui présente exactement un canal d'admission (6) par cylindre du moteur à combustion interne,
- comportant un dispositif de clapet (7), qui présente pour chaque canal d'admission (6) un clapet (8) pour modifier la section transversale traversée par un écoulement du canal d'admission respectif (6),
- dans lequel le dispositif de clapet (7) présente pour tous les clapets (8) un arbre d'actionnement commun (13) pour le basculement commun des clapets (8) autour de l'axe de pivotement de clapet (12),
- dans lequel l'arbre d'actionnement (13) supporte de manière solidaire en rotation un support d'aimant (43), qui supporte de son côté un aimant permanent (-44), qui coopère avec un capteur d'angle de rotation (32) pour la reconnaissance de palier rotatif du dispositif de clapet (7),
- dans lequel le logement (5) présente entre l'aimant permanent (44) et le capteur d'angle de rotation (32) une portion de paroi (46),
**caractérisé en ce que** la portion de paroi (46) présente une percée murale.

2. Dispositif de clapet selon la revendication 1, **caractérisé en ce que** le capteur (32) est disposé dans un réceptacle de capteur (49), qui présente un espace de réceptacle à configuration conique (50) et une zone d'étanchéité (51).

3. Dispositif de clapet selon la revendication 2, **caractérisé en ce que** l'espace de réceptacle présente une plus petite section transversale que la zone d'étanchéité (51), de telle sorte qu'entre l'espace de réceptacle (50) et la zone d'étanchéité (51) un épaulement (53) soit formé, à partir duquel s'étend la percée murale (48) dans la direction de l'espace de réceptacle (50).

4. Dispositif de clapet selon une des revendications 1 à 3, **caractérisé en ce que**
- le clapet respectif (8) est conçu comme un clapet de vasque, qui présente une zone d'étrier incurvée (9) et une zone de coque (10) dépassant de cette dernière,
- la zone d'étrier respective (9) présente deux extrémités d'étrier (11) espacées l'une de l'autre, qui sont disposées coaxialement à un axe de pivotement de clapet (12),
- le clapet respectif (8) est disposé entre les extrémités d'étrier (11) de manière excentrée par rapport à l'axe de pivotement de clapet (12),
- l'arbre d'actionnement (13) présente pour chaque clapet (8) une saillie (14),
- le clapet respectif (8) est disposé avec sa zone d'étrier (9) le long de la saillie correspondante (14) sur l'arbre d'actionnement (13).

5. Dispositif de clapet selon la revendication 4, **caractérisé en ce que** les clapets (8) et les canaux d'admission (6) sont harmonisés les uns aux autres, de telle sorte que le clapet respectif (8) dans sa position ouverte s'étend avec sa zone d'étrier (9) et avec sa zone de coque (10) le long d'une paroi intérieure (15) du canal d'admission respectif (6).

6. Dispositif de clapet selon la revendication 5, **caractérisé en ce que** le canal d'admission respectif (6) présente sur sa paroi intérieure (15) une cavité (16), dans laquelle le clapet (8) dans sa position ouverte plonge au moins partiellement au moins par une portion située entre les extrémités d'étrier, dans lequel il peut notamment être prévu que le clapet (8) dans sa position ouverte obture au ras de la paroi intérieure (15) du côté entrant par sa portion (17) plongeant dans la cavité (16).

7. Dispositif de clapet selon la revendication 5 ou 6, **caractérisé en ce que** la zone de coque (10) du clapet respectif (8) dans la position ouverte de ce dernier est adaptée au contour de la paroi intérieure (15), dans lequel il peut notamment être prévu que cette adaptation se fasse de telle sorte que la zone de coque (10) prolonge le contour de la paroi intérieure (15) dans la direction d'écoulement (18).

8. Dispositif de clapet selon une des revendications 1 à 7, **caractérisé en ce que** le clapet respectif (8) est moulé par injection sur l'arbre d'actionnement (13).

9. Dispositif de clapet selon une des revendications 1 à 8, **caractérisé en ce que**
- l'arbre d'actionnement (13) présente des deux côtés de chaque clapet (8) une zone de palier droite (19),
- le logement (5) présente plusieurs paliers (20), dans lesquels les zones de palier (19) de l'arbre d'actionnement (13) sont positionnés,
- dans lequel il peut notamment être prévu que chaque palier (20) présente dans une première demie coque de palier (21) réalisée en un seul tenant sur le logement (5) et une deuxième demie coque de palier (22) réalisée sur une partie de palier (23) montée sur le logement (5).

10. Dispositif de clapet selon une des revendications 1 à 9, **caractérisé en ce que**
- des clapets voisins (8) sont disposés sur l'arbre d'actionnement (13) en étant décalés les uns par rapport aux autres d'un angle de différence par rapport à l'axe de pivotement de clapet (12),
- dans lequel il peut notamment être prévu que l'angle de différence augmente en ce qui concerne un clapet (8) positionné proximalement par rapport à un servomoteur (42) pour entraîner l'arbre d'actionnement à mesure que l'espacement par rapport au servomoteur (42) augmente,
- dans lequel il peut notamment être prévu que les angles de différence des clapets (8) soient harmonisés les uns par rapport aux autres de telle sorte qu'un clapet (8) positionné distalement par rapport à un servomoteur (42) pour entraîner l'arbre d'actionnement (13) lors de la fermeture ou l'ouverture des clapets (8) vienne se positionner d'abord sur une paroi (15 ;26) du canal d'admission respectif (6) et les autres clapets (8) viennent se positionner les uns après les autres sur la paroi respective (15 ;26) du canal d'admission respectif (6) à mesure que l'espace par rapport au servomoteur (42) diminue,
- dans lequel il peut notamment être prévu que l'angle de différence entre des clapets voisins (8) s'élève au maximum à 10° ou au maximum à 5° ou au maximum à 2°.

11. Dispositif de clapet selon une des revendications 1 à 10, **caractérisé en ce que**
- l'arbre d'actionnement (13) est couplé par l'intermédiaire d'un élément de levier (28) avec un servomoteur (42),
- l'élément de levier (28) présente un insert métallique (29) et un corps moulé par injection (30) en plastique sur l'insert (29),
- dans lequel il peut notamment être prévu que l'insert (29) dépasse en saillie à partir du corps en plastique (30) et coopère avec un capteur d'angle de rotation (32) pour la reconnaissance de palier rotatif du dispositif de clapet (7),
- dans lequel il peut notamment être prévu que le corps en plastique (30) présente une portion de palier (39) cylindrique, qui est positionnée rotativement dans un logement de palier (40) complémentaire du palier (5) autour de l'axe de pivotement du clapet (12).

12. Dispositif de clapet selon une des revendications 1 à 11, **caractérisé en ce que** le logement (5) est conçu comme une bride intermédiaire, qui peut être montée entre le moteur à combustion interne et le reste de l'installation d'aspiration (1).

13. Dispositif de clapet selon une des revendications 1 à 12, **caractérisé en ce que** le canal d'admission respectif (6) a une conception monoflux ou à double flux.

14. Dispositif d'aspiration pour l'alimentation en air frais d'un moteur à combustion interne, notamment d'un véhicule automobile, comportant au moins un dispositif de clapet (2) selon une des revendications 1 à 13.
